# EUROPEAN PATENT SPECIFICATION

(11) **EP 3 145 170 B1**
(45) Date of publication and mention of the grant of the patent: **17.03.2021**
(21) Application number: 16165719.2
(22) Date of filing: 18.04.2016
(51) Int. Cl.: H04N 5/232

(54) **METHOD AND APPARATUS FOR CONTROLLING POSITIONING OF CAMERA DEVICE, CAMERA DEVICE AND TERMINAL DEVICE**
VERFAHREN UND VORRICHTUNG ZUR STEUERUNG DER POSITIONIERUNG EINER KAMERAVORRICHTUNG, KAMERAVORRICHTUNG UND ENDGERÄTEVORRICHTUNG
PROCÉDÉ ET APPAREIL POUR COMMANDER LE POSITIONNEMENT D'UN DISPOSITIF DE CAMÉRA, DISPOSITIF DE CAMÉRA ET DISPOSITIF DE TERMINAL

(30) Priority: 17.09.2015 CN 201510595608
(43) Date of publication of application: 22.03.2017
(73) Proprietor: Xiaomi Inc., Beijing 100085 (CN)
(72) Inventor: FU, Qiang, 100085 Haidian District (CN); HAO, Sihan, 100085 Haidian District (CN); HOU, Enxing, 100085 Haidian District (CN)
(74) Representative: Sadler, Peter Frederick

(56) References cited:
- US-A1- 2005 057 656

## Description

### TECHNICAL FIELD

The present disclosure generally relates to the field of smart homes and, more particularly, to a method and an apparatus for controlling a positioning of a camera device, as well as a corresponding camera device and a terminal device.

### BACKGROUND

There are various camera devices currently on the market for camera shooting and monitoring. A security camera, as one kind of camera device, typically has a narrow monitoring view field due to its own structure. In the related art, security cameras may be provided with a rotatable pan/tilt mechanism, such that a user may adjust a region monitored by the security camera by controlling a motor to pan and/or tilt the camera, thus expanding the region monitored by the security camera largely.

US patent application US 2005/0057656 describes a camera with a pan motor coupled with the camera housing to drive the camera housing in pan movement relative to the camera support, and a tilt motor coupled with the camera lens to drive the camera lens in tilt movement relative to the camera housing. During initial boot-up, the pan motor and tilt motor move the camera to ascertain the permissible ranges of movement, and limit switches measure the boundaries of the permissible ranges of movement to provide pan limit positions and tilt limit positions. Relative displacement measurements are used to determine the absolute coordinate positions of the camera movements. The system can determine a reset position which is a center position disposed substantially equidistant between the pan limit positions and substantially equidistant between the tilt limit positions. The camera may be moved to the reset position after initial boot-up. Alternatively, the system may be programmed or configured to allow a user to set a home position so that the camera will automatically move to the home position after initial boot-up. The home position may be set with respect to the reset position, or with respect to the pan limit positions and tilt limit positions.

### SUMMARY

The present disclosure provides a method and an apparatus for controlling a positioning of a camera device, and a computer program for controlling a positioning of the camera device according to independent claims 1, 4 and 6. Dependent claims constitute embodiments of the invention. The embodiments of the following description which are not covered by the appended claims are considered as not being part of the present invention.

According to a first aspect of embodiments of the present disclosure, there is provided a method for controlling a positioning of a camera device, including:
controlling a motor connected with the camera device to move in a horizontal direction (e.g. to pan), determining a horizontal center position according to two limit positions in the horizontal direction, and moving the camera device to the horizontal center position; and
controlling the motor connected with the camera device to move in a vertical direction (e.g. to tilt), determining a vertical center position according to two limit positions in the vertical direction, and moving the camera device to the vertical center position.

The method further includes:
moving the camera device according to a movement instruction obtained, and recording a coordinate position where the camera device is moved to in the horizontal direction and the vertical direction after reaching the horizontal center position and the vertical center position.

The method further includes:
controlling the camera device to first move to the horizontal center position and the vertical center position and to then move to the coordinate position where the camera device has been moved to in the horizontal direction and the vertical direction, after detecting that the camera device is toggled or restarted or a preset time period is reached.

Controlling a motor connected with the camera device to move in a horizontal direction, determining a horizontal center position according to two limit positions in the horizontal direction, and moving the camera device to the horizontal center position includes:
controlling the motor connected with the camera device to move in one of a horizontal-left direction and a horizontal-right direction;
recording number of rotations of the motor when the motor is moved to the limit position in the one of the horizontal-left direction and the horizontal-right direction;
moving the motor in the other of the horizontal-left direction and the horizontal-right direction;
recording an accumulative number of rotations of the motor between the two limit positions in the horizontal direction when the motor is moved to the limit position in the other of the horizontal-left direction and the horizontal-right direction; and
moving the motor in the one of the horizontal-left direction and the horizontal-right direction again by half of the number of accumulative rotations of the motor, so as to move the camera device to the horizontal center position.

Controlling the motor connected with the camera device to move in a vertical direction, determining a vertical center position according to two limit positions in the vertical direction, and moving the camera device to the vertical center position includes:
controlling the motor connected with the camera device to move in one of a vertical-up direction and a vertical-down direction;
recording a number of rotations of the motor when the motor is moved to the limit position in the one of the vertical-up direction and the vertical-down direction;
moving the motor in the other of the vertical-up direction and the vertical-down direction;
recording an accumulative number of rotations of the motor between the two limit positions in the vertical direction when the motor is moved to the limit position in the other of the vertical-up direction and the vertical-down direction; and
moving the motor in the one of the vertical-up direction and the vertical-down direction again by half of the accumulative number of rotations of the motor, so as to move the camera device to the vertical center position.

Optionally, moving the camera device according to a movement instruction obtained, and recording a coordinate position where the camera device is moved to in the horizontal direction and the vertical direction after reaching the horizontal center position and the vertical center position includes:
obtaining a movement instruction from a mobile terminal or a remote controller, in which the movement instruction includes a target position to be moved to;
moving the camera device to the target position from the horizontal center position and the vertical center position according to the target position;
recording the coordinate position where the camera device is moved to in the horizontal direction and the vertical direction by recording a number of rotations and a rotation direction of the motor in the horizontal direction and the vertical direction.

Optionally, obtaining a movement instruction from a mobile terminal or a remote controller includes:
obtaining a movement instruction transmitted from the mobile terminal or the remote controller via WiFi, Bluetooth, or infrared connection.

According to a second aspect of embodiments of the present disclosure, there is provided an apparatus for controlling a positioning of a camera device, including:
a horizontal locating module, configured to control a motor connected with the camera device to move in a horizontal direction, to determine a horizontal center position according to two limit positions in the horizontal direction, and to move the camera device to the horizontal center position; and
a vertical locating module, configured to control the motor connected with the camera device to move in a vertical direction, to determine a vertical center position according to two limit positions in the vertical direction, and to move the camera device to the vertical center position.

The apparatus further includes:
an instruction processing module, configured to move the camera device according to a movement instruction obtained, and to record a coordinate position where the camera device is moved to in the horizontal direction and the vertical direction after reaching the horizontal center position and the vertical center position.

The apparatus further includes:
a resetting module, configured to control the camera device to first move to the horizontal center position and the vertical center position and to then move to the coordinate position recorded by the instruction processing module, after detecting that the camera device is toggled, activated or restarted or a preset time period is reached.

The horizontal locating module includes:
a first processing sub-module, configured to control the motor connected with the camera device to move in one of a horizontal-left direction and a horizontal-right direction, to record a rotation turns of the motor when the motor is moved to the limit position in the one of the horizontal-left direction and the horizontal-right direction, to move the motor in the other of the horizontal-left direction and the horizontal-right direction, and to record an accumulative rotation turns of the motor between the two limit positions in the horizontal direction when the motor is moved to the limit position in the other of the horizontal-left direction and the horizontal-right direction;
a second processing sub-module configured to move the motor in the one of the horizontal-left direction and the horizontal-right direction again by half of the accumulative rotation turns of the motor, so as to move the camera device to the horizontal center position.

The vertical locating module includes:
a first processing sub-module, configured to control the motor connected with the camera device to move in one of a vertical-up direction and a vertical-down direction, to record a rotation turns of the motor when the motor is moved to the limit position in the one of the vertical-up direction and the vertical-down direction, to move the motor in the other of the vertical-up direction and the vertical-down direction, and to record an accumulative rotation turns of the motor between the two limit positions in the vertical direction when the motor is moved to the limit position in the other of the vertical-up direction and the vertical-down direction;
a second processing sub-module, configured to move the motor in the one of the vertical-up direction and the vertical-down direction again by half of the accumulative rotation turns of the motor, so as to move the camera device to the vertical center position.

The technical solutions provided by embodiments of the present disclosure may have the following advantageous effects.

In the present disclosure, by controlling the motor connected with the camera device to move in the horizontal direction and the vertical direction respectively, the horizontal center position may be determined according to the two limit positions in the horizontal direction, and the vertical center position may be determined according to the two limit positions in the vertical direction, and finally the camera device may be moved to the horizontal center position and the vertical center position, such that it is possible to control the camera device to be accurately positioned to a center position and thus to ensure the accuracy of the monitoring of the camera device.

In the present disclosure, the camera device may also be moved to the target position according to the movement instruction obtained, and the coordinate position where the camera device is moved to in the horizontal direction and the vertical direction is recorded, and after it is detected that the camera device is toggled, activated or restarted or the preset time period is reached, it is determined that automatic reset processing is triggered, such that the camera device is first moved to the horizontal center position and the vertical center position and then moved to the recorded coordinate position where the camera device has been moved to in the horizontal direction and the vertical direction, thus realizing accurate positioning of the camera device in use.

In the present disclosure, according to the recorded accumulative number of rotations of the motor, it may be determined that a position where the motor is moved to by half of the accumulative rotation turns of the motor is the horizontal center position or the vertical center position, thus accurately determining the center position.

In the present disclosure, the camera device may be connected with a mobile terminal or a remote controller via various connection ways such as WiFi, Bluetooth and infrared connection.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart of a method for controlling a positioning of a camera device according to an exemplary embodiment.
Fig. 2 is a flow chart of another method for controlling a positioning of a camera device according to an exemplary embodiment.
Fig. 3 is a flow chart of another method for controlling a positioning of a camera device according to an exemplary embodiment.
Fig. 4 is a block diagram of an apparatus for controlling a positioning of a camera device according to an exemplary embodiment.
Fig. 5 is a block diagram of another apparatus for controlling a positioning of a camera device according to an exemplary embodiment.
Fig. 6 is a block diagram of a camera device according to an exemplary embodiment.
Fig. 7 is a block diagram of a terminal device according to an exemplary embodiment.
Fig. 8 is a block diagram of a device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

Terms used herein in the description of the present disclosure arc only for the purpose of describing specific embodiments, but should not be construed to limit the present disclosure. As used in the description of the present disclosure and the appended claims, "a" and "the" in singular forms mean including plural forms, unless clearly indicated in the context otherwise. It should also be understood that, as used herein, the term "and/or" represents and contains any one and all possible combinations of one or more associated listed items.

It should be understood that, although terms such as "first," "second" and "third" are used herein for describing various information, these information should not be limited by these terms. These terms arc only used for distinguishing information of the same type. For example, first information may also be called second information, and similarly, the second information may also be called the first information, without departing from the scope of the present disclosure. As used herein, the term "if' may be construed to mean "when" or "upon" or "in response to determining" depending on the context.

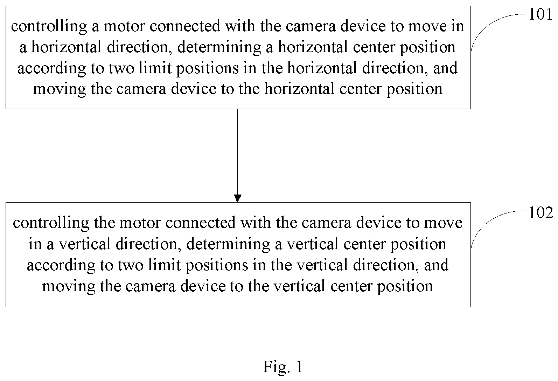

Fig. 1 is a flow chart of a method for controlling a positioning of a camera device according to an exemplary embodiment. The method may be used in a camera device, and includes the following steps.

In step 101, a motor connected with the camera device is controlled to move in a horizontal direction, a horizontal center position is determined according to two limit positions in the horizontal direction, and the camera device is moved to the horizontal center position.

In this step, the motor connected with the camera device is controlled to move in one of a horizontal-left direction and a horizontal-right direction, rotation turns of the motor are recorded when the motor is moved to the limit position in the one of the horizontal-left direction and the horizontal-right direction, the motor is moved in the other of the horizontal-left direction and the horizontal-right direction, an accumulative number of rotation turns of the motor between the two limit positions in the horizontal direction is recorded when the motor is moved to the limit position in the other of the horizontal-left direction and the horizontal-right direction, and the motor is moved in the one of the horizontal-left direction and the horizontal-right direction again by half of the accumulative rotation turns of the motor, so as to move the camera device to the horizontal center position.

In step 102, the motor connected with the camera device is controlled to move in a vertical direction, a vertical center position is determined according to two limit positions in the vertical direction, and the camera device is moved to the vertical center position.

In this step, the motor connected with the camera device is controlled to move in one of a vertical-up direction and a vertical-down direction, rotation turns of the motor are recorded when the motor is moved to the limit position in the one of the vertical-up direction and the vertical-down direction, the motor is moved in the other of the vertical-up direction and the vertical-down direction, an accumulative number of rotation turns of the motor between the two limit positions in the vertical direction is recorded when the motor is moved to the limit position in the other of the vertical-up direction and the vertical-down direction, and the motor is moved in the one of the vertical-up direction and the vertical-down direction again by half of the accumulative rotation turns of the motor, so as to move the camera device to the vertical center position.

It should be noted that, the sequence of the above steps 101 and 102 is not necessary. The camera device may be first moved to the horizontal center position or the vertical center position, as long as the camera device is moved to a center position.

It may be seen from this embodiment that, in the present disclosure, by controlling the motor connected with the camera device to move in the horizontal direction and the vertical direction respectively, the horizontal center position may be determined according to the two limit positions in the horizontal direction, and the vertical center position may be determined according to the two limit positions in the vertical direction, and finally the camera device may be moved to the horizontal center position and the vertical center position, such that it is possible to control the camera device to be accurately positioned to a center position and thus to ensure the accuracy of the monitoring of the camera device.

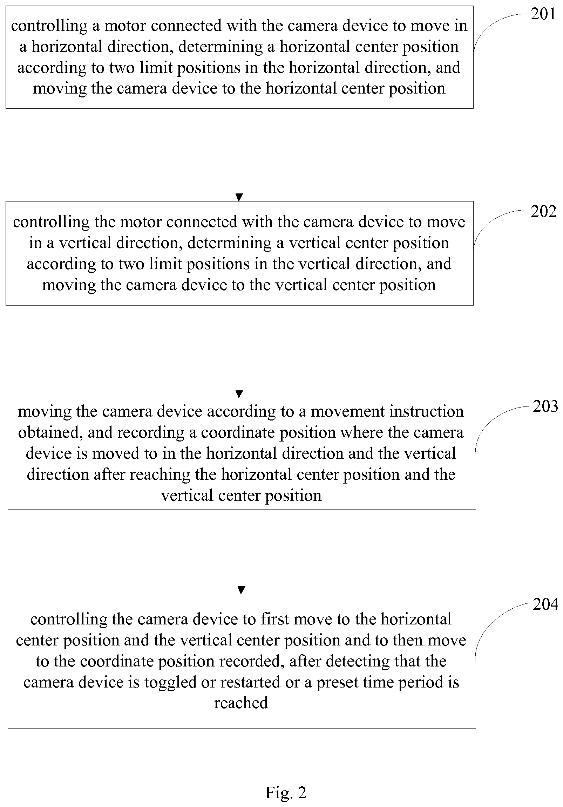

Fig. 2 is a flow chart of another method for controlling a positioning of a camera device according to an exemplary embodiment. The method may be used in a camera device, and includes the following steps.

In step 201, a motor connected with the camera device is controlled to move in a horizontal direction, a horizontal center position is determined according to two limit positions in the horizontal direction, and the camera device is moved to the horizontal center position.

Concerning this step, reference is made to the description of step 101, which will not be elaborated herein.

In step 202, the motor connected with the camera device is controlled to move in a vertical direction, a vertical center position is determined according to two limit positions in the vertical direction, and the camera device is moved to the vertical center position.

Concerning this step, reference is made to the description of step 102, which will not be elaborated herein.

In step 203, the camera device is moved according to a movement instruction obtained, and a coordinate position where the camera device is moved to in the horizontal direction and the vertical direction after reaching the horizontal center position and the vertical center position is recorded.

In this step, a movement instruction is obtained from a mobile terminal or a remote controller, in which the movement instruction includes a target position to be moved to; the camera device is moved to the target position from the horizontal center position and the vertical center position according to the target position; the coordinate position where the camera device is moved to in the horizontal direction and the vertical direction is recorded by recording a number of rotation turns and a rotation direction of the motor in the horizontal direction and the vertical direction.

Obtaining a movement instruction from a mobile terminal or a remote controller includes: obtaining a movement instruction transmitted from the mobile terminal or the remote controller via WiFi, Bluetooth, or infrared connection.

In step 204, after it is detected that the camera device is toggled or restarted or a preset time period is reached, the camera device is controlled to first move to the horizontal center position and the vertical center position and then move to the recorded coordinate position where the camera device has been moved to in the horizontal direction and the vertical direction.

The preset time period in this step may be set by day or hour, e.g., every several days or hours.

It may be seen from this embodiment that, in the present disclosure, after the motor controls the camera device to reach the horizontal center position and the vertical center position, the camera device may be moved to the target position according to the movement instruction obtained, and the coordinate position where the camera device is moved to in the horizontal direction and the vertical direction is recorded, and after it is detected that the camera device is toggled or restarted or the preset time period is reached, it is determined that automatic reset processing is triggered, such that the camera device is controlled to first move to the horizontal center position and the vertical center position and to then move to the recorded coordinate position where the camera device has been moved to in the horizontal direction and the vertical direction, thus realizing accurate positioning of the camera device in use.

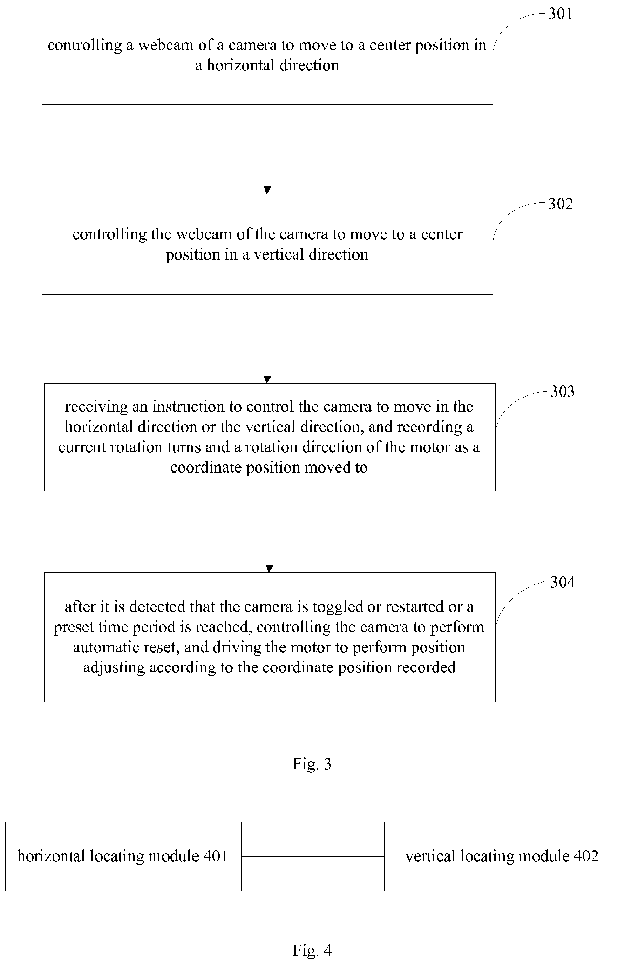

Fig. 3 is a flow chart of another method for controlling a positioning of a camera device according to an exemplary embodiment.

The method may be used in a camera device. The camera device may be a smart camera, or webcam, provided with a pan and/or tilt functionality, whose monitoring position may be adjusted by an application (APP) in a mobile phone, in which the pan/tilt system is provided with motors for controlling a horizontal movement and a vertical movement respectively.

The method includes the following steps.

In step 301, a webcam of a camera is controlled to move to a center position in a horizontal direction.

When the camera is started, a MCU (micro controller unit) in the camera controls the motor in the horizontal direction to first move from right to left. When the motor is moved to a left limit position, a limit switch of the pan tilt is triggered to give the MCU a notification that the motor cannot be moved leftwards any more. After receiving the notification, the MCU controls the motor to move rightwards and records the number of rotations of the motor. After the motor is moved to a right limit position and the limit switch is triggered, the MCU records an accumulative number of rotations N (x) of the motor. According to the accumulative rotation turns N (x) of the motor, it may be known that a position which is moved to after the motor is rotated by N (x)/2 rotation turns is the center position in the horizontal direction. Thus, the MCU controls the motor to move from right to left by N (x)/2 rotation turns and then to stop moving in the horizontal direction. At this time, the webcam of the camera is in the center position in the horizontal direction.

It should be noted that, in the above description, controlling the motor in the horizontal direction to first move from right to left is taken as an example, however, the motor in the horizontal direction may also be first moved from left to right, and the principles thereof are similar.

In step 302, the webcam of the camera is controlled to move to a center position in a vertical direction.

In this step, the MCU positions the webcam of the camera to the center position in the vertical direction according to a method similar to that in step 301. This step includes the following steps.

The MCU in the camera controls the motor in the vertical direction to first move from down to up. When the motor is moved to an upper limit position, the limit switch of the pan tilt is triggered to give the MCU a notification that the motor cannot be moved upwards any more. After receiving the notification, the MCU controls the motor to move downwards and records the number of rotations of the motor. After the motor is moved to a lower limit position and the limit switch is triggered, the MCU records an accumulative number of rotations N (x) of the motor. According to the accumulative rotation turns N (x) of the motor, it may be known that a position which is moved to after the motor is rotated by N (x)/2 rotations is the center position in the vertical direction. Thus, the MCU controls the motor to move from down to up by N (x)/2 rotations and then to stop moving in the vertical direction. At this time, the webcam of the camera is in the center position in the vertical direction.

It should be noted that, in the above description, controlling the motor in the vertical direction to first move from down to up is taken as an example, however, the motor in the vertical direction may also be first moved from up to down, and the principles thereof are similar.

It should also be noted that, in the above steps 301 and 302, first moving the webcam to the center position in the horizontal direction and then moving the webcam to the center position in the vertical direction are taken as an example. However, the present disclosure is not limited to this. The webcam may be first moved to the center position in the vertical direction, and then moved to the center position in the horizontal direction, as long as the camera may be moved to a center position.

In step 303, an instruction is received for controlling the camera to move in the horizontal direction or the vertical direction, and a current number of rotations and a rotation direction of the motor are recorded as a coordinate position moved to.

In this step, the camera may receive an instruction which is sent by a user from a mobile terminal such as a mobile phone or other remote controllers for moving. The camera is provided with a chip or module supporting WiFi, Bluetooth or infrared connection. The mobile terminal or the remote controller may establish a communication with the camera via WiFi, Bluetooth or infrared connection, and transmit a movement instruction.

The MCU may record current rotation turns and rotation directions of the motor for controlling the horizontal movement and the motor for controlling the vertical movement when controlling the camera to move in the horizontal direction or the vertical direction according to the instruction received.

For example, a user may set that the webcam of the camera moves from point A to point B via an APP of a mobile phone, and the MCU obtains an instruction transmitted from the APP of the mobile phone and then controls the camera to move from point A to point B via the motor, records current rotation turns and rotation directions of the motor for controlling the horizontal movement and the motor for controlling the vertical movement, and transmits these data to the APP of the mobile phone. These data may be further transmitted to a server, and the server may set a storage area for storing monitoring videos shot by the camera, and sends a storage address to the mobile phone, such that it is possible to view the monitoring videos according to the storage address on the mobile phone.

In the above step, the number of rotations and the rotation direction of the motor are recorded, in fact, the number of rotations and the rotation direction are used as coordinates. A coordinate at the center position may be 0, a coordinate where the motor is rotated leftwards or downwards may be negative, and a coordinate where the motor is rotated rightwards or upwards may be positive.

In step 304, after it is detected that the camera is toggled or restarted or a preset time period is reached, the camera is controlled to perform automatic reset, and the motor is driven to perform position adjusting according to the coordinate position recorded.

In this step, after the user toggles the camera by hand, the camera is restarted or the preset time period is reached, the camera is triggered to perform reset processing.

The MCU controls the camera to first perform the automatic reset process in steps 301 and 302, and then drives the motor to perform position adjusting according to the coordinate position recorded in step 303. Concerning the automatic reset process, reference is made to the description of steps 301 and 302, which is not elaborated herein.

Since during the monitoring, once the camera is toggled, monitoring position and region will be changed, which does not satisfy a monitoring requirement originally set, the camera is triggered to perform reset processing for returning to original monitoring position and state. After the camera is restarted for various reasons, it needs to return to original monitoring position and state, and thus the camera will also be triggered to perform reset processing. In addition, it is also possible to perform periodic reset processing, e.g., to perform reset processing every several days, which is not limited in the present disclosure.

In conclusion, the present disclosure provides a processing manner of automatically positioning the camera to the center position when the camera is started and a processing manner of automatic reset calibration in use. When a smart camera is used, wrong angle judgment of the camera occurs because the user rotates the webcam of the camera. For example, a loop monitoring from point A to point B is previously set, and after the camera is rotated, the monitoring region is not accurate any more. In this case, this problem is solved by automatic calibration of the camera in the present disclosure. Once it is detected that the user toggles the webcam by hand, the reset processing is triggered, and the camera is first automatically positioned to the center position and then moved to the recorded position so as to realize accurate positioning of the camera, thus enhancing the accuracy of the monitoring of the camera and the accuracy of a monitoring screen.

Correspondingly to the method according to the above embodiments, the present disclosure further provides embodiments of an apparatus for controlling a positioning of a camera device and a corresponding terminal.

Fig. 4 is a block diagram of an apparatus for controlling a positioning of a camera device according to an exemplary embodiment.

As shown in Fig. 4, the apparatus for controlling the positioning of the camera device includes a horizontal locating module 401 and a vertical locating module 402.

The horizontal locating module 401 is configured to control a motor connected with the camera device to move in a horizontal direction, to determine a horizontal center position according to two limit positions in the horizontal direction, and to move the camera device to the horizontal center position.

The vertical locating module 402 is configured to control the motor connected with the camera device to move in a vertical direction, to determine a vertical center position according to two limit positions in the vertical direction, and to move the camera device to the vertical center position.

In this embodiment of the present disclosure, by controlling the motor connected with the camera device to move in the horizontal direction and the vertical direction respectively, the horizontal center position may be determined according to the two limit positions in the horizontal direction and the vertical center position may be determined according to the two limit positions in the vertical direction, and finally the camera device may be moved to the horizontal center position and the vertical center position, such that it is possible to control the camera device to be accurately positioned to a center position and thus to ensure the accuracy of the monitoring of the camera device.

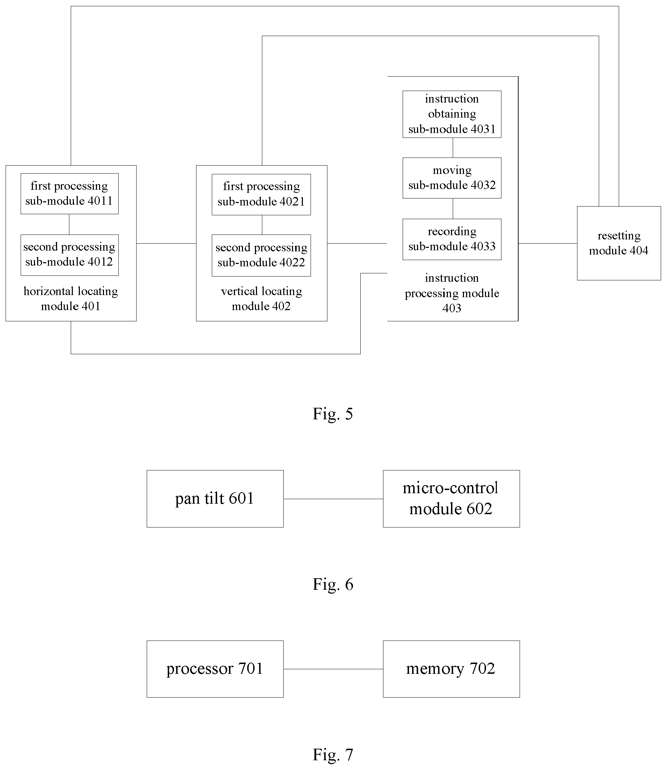

Fig. 5 is a block diagram of another apparatus for controlling a positioning of a camera device according to an exemplary embodiment.

As shown in Fig. 5, the apparatus for controlling the positioning of the camera device includes a horizontal locating module 401, a vertical locating module 402, an instruction processing module 403 and a resetting module 404.

Concerning the function of the horizontal locating module 401 and the vertical locating module 402, reference may be made to the description of Fig. 4.

The instruction processing module 403 is configured to move the camera device according to a movement instruction obtained, and to record a coordinate position where the camera device is moved to in the horizontal direction and the vertical direction after reaching the horizontal center position and the vertical center position.

The resetting module 404 is configured to control the camera device to first move to the horizontal center position and the vertical center position and to then move to the coordinate position recorded by the instruction processing module 403, after detecting that the camera device is toggled or restarted or a set time period is reached.

The horizontal locating module 401 includes a first processing sub-module 4011 and a second processing sub-module 4012.

The first processing sub-module 4011 is configured to control the motor connected with the camera device to move in one of a horizontal-left direction and a horizontal-right direction, to record a rotation turns of the motor when the motor is moved to a limit position in the one of the horizontal-left direction and the horizontal-right direction, to move the motor in the other of the horizontal-left direction and the horizontal-right direction, and to record an accumulative rotation turns of the motor between the two limit positions in the horizontal direction when the motor is moved to a limit position in the other of the horizontal-left direction and the horizontal-right direction.

The second processing sub-module 4012 is configured to move the motor in the one of the horizontal-left direction and the horizontal-right direction again by half of the accumulative rotation turns of the motor, so as to move the camera device to the horizontal center position.

The vertical locating module 402 includes a first processing sub-module 4021 and a second processing sub-module 4022.

The first processing sub-module 4021 is configured to control the motor connected with the camera device to move in one of a vertical-up direction and a vertical-down direction, to record a rotation turns of the motor when the motor is moved to the limit position in the one of the vertical-up direction and the vertical-down direction, to move the motor in the other of the vertical-up direction and the vertical-down direction, and to record an accumulative rotation turns of the motor between the two limit positions in the vertical direction when the motor is moved to the limit position in the other of the vertical-up direction and the vertical-down direction.

The second processing sub-module 4022 is configured to move the motor in the one of the vertical-up direction and the vertical-down direction again by half of the accumulative rotation turns of the motor, so as to move the camera device to the vertical center position.

The instruction processing module 403 includes an instruction obtaining sub-module 4031, a moving sub-module 4032 and a recording sub-module 4033.

The instruction obtaining sub-module 4031 is configured to obtain a movement instruction from a mobile terminal or a remote controller, in which the movement instruction includes a target position to be moved to. The instruction obtaining sub-module 4031 obtains a movement instruction transmitted from the mobile terminal or the remote controller via WiFi, Bluetooth, or infrared connection.

The moving sub-module 4032 is configured to move the camera device to the target position from the horizontal center position and the vertical center position according to the target position obtained by the instruction obtaining sub-module 4031.

The recording sub-module 4033 is configured to record the coordinate position where the camera device is moved to by the moving sub-module 4032 in the horizontal direction and the vertical direction by recording a rotation turns and a rotation direction of the motor in the horizontal direction and the vertical direction.

It may be seen from this embodiment that, in the present disclosure, after the motor controls the camera device to reach the horizontal center position and the vertical center position, the camera device may be moved to the target position according to the movement instruction obtained, and the coordinate position where the camera device is moved to in the horizontal direction and the vertical direction is recorded, and after it is detected that the camera device is toggled or restarted or the preset time period is reached, it is determined that automatic reset processing is triggered, such that the camera device is controlled to first move to the horizontal center position and the vertical center position and to then move to the recorded coordinate position where the camera device has been moved to in the horizontal direction and the vertical direction, thus realizing accurate positioning of the camera device in use.

Fig. 6 is a block diagram of a camera device according to an exemplary embodiment.

As shown in Fig. 6, the camera device includes a pan tilt 601 system and a micro-control module 602.

The pan tilt system 601 is provided with a motor for driving the camera device to move, to pan and tilt the camera.

The micro-control module 602 is configured to control the motor to move in a horizontal direction, to determine a horizontal center position according to two limit positions in the horizontal direction, and to move the camera device to the horizontal center position; and to control the motor to move in a vertical direction, to determine a vertical center position according to two limit positions in the vertical direction, and to move the camera device to the vertical center position.

Concerning the micro-control module 602, reference may be made to the description of Fig. 5. The micro-control module 602 includes a horizontal locating module, a vertical locating module, an instruction processing module and a resetting module (not shown in Fig. 6).

The horizontal locating module is configured to control the motor to move in the horizontal direction, to determine the horizontal center position according to the two limit positions in the horizontal direction, and to move the camera device to the horizontal center position.

The vertical locating module is configured to control the motor to move in the vertical direction, to determine the vertical center position according to the two limit positions in the vertical direction, and to move the camera device to the vertical center position.

The instruction processing module is configured to move the camera device according to a movement instruction obtained, and to record a coordinate position where the camera device is moved to in the horizontal direction and the vertical direction after reaching the horizontal center position and the vertical center position.

The resetting module is configured to control the camera device to first move to the horizontal center position and the vertical center position and to then move to the coordinate position recorded by the instruction processing module, after detecting that the camera device is toggled or restarted or a set time period is reached.

It may be seen from this embodiment that, in the present disclosure, by controlling the motor connected with the camera device to move in the horizontal direction and the vertical direction respectively, the horizontal center position may be determined according to the two limit positions in the horizontal direction and the vertical center position may be determined according to the two limit positions in the vertical direction, and finally the camera device may be moved to the horizontal center position and the vertical center position, such that it is possible to control the camera device to be accurately positioned to a center position and thus to ensure the accuracy of the monitoring of the camera device.

Concerning the implementation of the function and action of individual unit in the devices in the above embodiments, reference is made to the implementation of corresponding steps of the above methods, which will not be elaborated herein.

Since the device embodiments substantially correspond to the method embodiments, reference is made to the description of the method embodiments as to details not disclosed in the device embodiments. The above-described device embodiments are merely for the purpose of illustration. Those units described as separated components may be or may not be physically separated; those units described as a display component may be or may not be a physical unit, i.e., either located at one place or distributed onto a plurality of network units. The object of the present disclosure may be achieved by part or all of modules in accordance with practical requirements. It would be appreciated and executable by those skilled in the art without creative labor.

Correspondingly, the present disclosure further provides a terminal.

Fig. 7 is a block diagram of a terminal device according to an exemplary embodiment.

As shown in Fig. 7, the terminal device includes a processor 701 and a memory 702 for storing instructions executable by the processor.

The processor 701 is configured to:
control a motor connected with the camera device to move in a horizontal direction, determine a horizontal center position according to two limit positions in the horizontal direction, and move the camera device to the horizontal center position; and
control the motor connected with the camera device to move in a vertical direction, determine a vertical center position according to two limit positions in the vertical direction, and move the camera device to the vertical center position.

It should be noted that, concerning other programs stored in the memory 702, reference is made to the description of the above methods, which is not elaborated herein. The processor 701 is further configured to execute other programs stored in the memory 702.

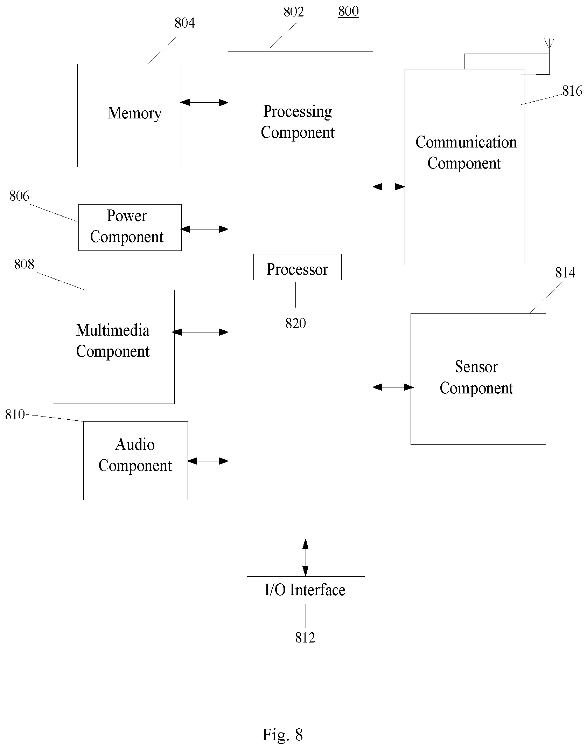

Fig. 8 is a block diagram of a device according to an exemplary embodiment.

For example, the device 800 may be a mobile phone, a computer, a digital broadcast terminal, a messaging device, a gaming console, a tablet, a medical device, exercise equipment, a personal digital assistant, and the like.

Referring to Fig. 8, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluctooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

A non-transitory computer-readable storage medium is provided, having stored therein instructions that, when executed by a processor of a mobile terminal, cause the mobile terminal to perform a method for controlling a positioning of a camera device. The method includes:
controlling a motor connected with the camera device to move in a horizontal direction, determining a horizontal center position according to two limit positions in the horizontal direction, and moving the camera device to the horizontal center position; and
controlling the motor connected with the camera device to move in a vertical direction, determining a vertical center position according to two limit positions in the vertical direction, and moving the camera device to the vertical center position.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the invention disclosed here. This application is intended to cover any variations, uses, or adaptations of embodiments of the invention, which is defined in the following claims.

## Claims

1. A method for controlling a positioning of a camera device, comprising:
controlling a motor connected with the camera device to move in a horizontal direction, determining a horizontal center position according to two limit positions in the horizontal direction, and moving the camera device to the horizontal center position (101; 201; 301);
controlling the motor connected with the camera device to move in a vertical direction, determining a vertical center position according to two limit positions in the vertical direction, and moving the camera device to the vertical center position (102; 202; 302); and
moving the camera device to a target position according to a movement instruction obtained, and recording a coordinate position where the camera device is moved to in the horizontal direction and the vertical direction after reaching the horizontal center position and the vertical center position (203; 303);
**characterised in that** the method further comprises:
controlling the camera device to first move to the horizontal center position and the vertical center position and to then move to the coordinate position where the camera device has been moved to in the horizontal direction and the vertical direction, after detecting that the camera device is toggled, activated or restarted or a preset time period is reached (204; 304);
further **characterized in that** controlling the motor connected with the camera device to move in the horizontal direction, determining the horizontal center position according to two limit positions in the horizontal direction, and moving the camera device to the horizontal center position (101; 201; 301) comprises:
controlling the motor connected with the camera device to move in one of a horizontal-left direction and a horizontal-right direction;
recording a number of rotations of the motor when the motor is moved to the limit position in the one of the horizontal-left direction and the horizontal-right direction;
moving the motor in the other of the horizontal-left direction and the horizontal-right direction;
recording an accumulative number of rotations of the motor between the two limit positions in the horizontal direction, when the motor is moved to the limit position in the other of the horizontal-left direction and the horizontal-right direction and
moving the motor in the one of the horizontal-left direction and the horizontal-right direction again by half of the accumulative rotations of the motor, so as to move the camera device to the horizontal center position;
and **in that** controlling the motor connected with the camera device to move in the vertical direction, determining the vertical center position according to two limit positions in the vertical direction, and moving the camera device to the vertical center position (102; 202; 302) comprises:
controlling the motor connected with the camera device to move in one of a vertical-up direction and a vertical-down direction;
recording a number of rotations of the motor when the motor is moved to the limit position in the one of the vertical-up direction and the vertical-down direction;
moving the motor in the other of the vertical-up direction and the vertical-down direction;
recording an accumulative number of rotations of the motor between the two limit positions in the vertical direction, when the motor is moved to the limit position in the other of the vertical-up direction and the vertical-down direction; and
moving the motor in the one of the vertical-up direction and the vertical-down direction again by half of the number of accumulative rotations of the motor, so as to move the camera device to the vertical center position.

2. The method of claim 1, wherein moving the camera device according to the movement instruction obtained, and recording the coordinate position where the camera device is moved to in the horizontal direction and the vertical direction after reaching the horizontal center position and the vertical center position (203; 303) comprises:
obtaining a movement instruction from a mobile terminal or a remote controller, in which the movement instruction comprises a target position to be moved to;
moving the camera device to the target position from the horizontal center position and the vertical center position according to the target position;
recording the coordinate position where the camera device is moved to in the horizontal direction and the vertical direction by recording the number of rotations and a rotation direction of the motor in the horizontal direction and the vertical direction.

3. The method of claim 1 or 2, wherein obtaining the movement instruction from the mobile terminal or the remote controller comprises:
obtaining a movement instruction transmitted from the mobile terminal or the remote controller via WiFi, Bluetooth, or infrared connection.

4. An apparatus for controlling a positioning of a camera device, comprising:
a horizontal locating module (401), configured to control a motor connected with the camera device to move in a horizontal direction, to determine a horizontal center position according to two limit positions in the horizontal direction, and to move the camera device to the horizontal center position;
a vertical locating module (402), configured to control the motor connected with the camera device to move in a vertical direction, to determine a vertical center position according to two limit positions in the vertical direction, and to move the camera device to the vertical center position;
an instruction processing module (403), configured to move the camera device to a target position according to a movement instruction obtained, and to record a coordinate position where the camera device is moved to in the horizontal direction and the vertical direction after reaching the horizontal center position and the vertical center position; and
**characterised in that** the apparatus further comprises:
a resetting module (404), configured to control the camera device to first move to the horizontal center position and the vertical center position and to then move to the coordinate position recorded by the instruction processing module (403), after detecting that the camera device is toggled or restarted or a preset time period is reached;
further **characterized in that** the horizontal locating module (401) comprises:
a first processing sub-module (4011), configured to control the motor connected with the camera device to move in one of a horizontal-left direction and a horizontal-right direction, to record a number of rotations of the motor when the motor is moved to the limit position in the one of the horizontal-left direction and the horizontal-right direction, to move the motor in the other of the horizontal-left direction and the horizontal-right direction, and to record an accumulative number of rotations of the motor between the two limit positions in the horizontal direction when the motor is moved to the limit position in the other of the horizontal-left direction and the horizontal-right direction and
a second processing sub-module (4012), configured to move the motor in the one of the horizontal-left direction and the horizontal-right direction again by half of the accumulative number of rotations of the motor, so as to move the camera device to the horizontal center position;
and **in that** the vertical locating module (402) comprises:
a first processing sub-module (4021), configured to control the motor connected with the camera device to move in one of a vertical-up direction and a vertical-down direction, to record a number of rotations of the motor when the motor is moved to the limit position in the one of the vertical-up direction and the vertical-down direction, to move the motor in the other of the vertical-up direction and the vertical-down direction, and to record an accumulative number of rotations of the motor between the two limit positions in the vertical direction when the motor is moved to the limit position in the other of the vertical-up direction and the vertical-down direction and
a second processing sub-module (4022), configured to move the motor in the one of the vertical-up direction and the vertical-down direction again by half of the accumulative number of rotations of the motor, so as to move the camera device to the vertical center position.

5. A camera device, comprising an apparatus for controlling a positioning of a camera device of claim 4.

6. A computer program which when executed on a camera device according to claim 5 causes it to carry out the method of any of claims 1 to 3.

## Patentansprüche

1. Verfahren zum Steuern einer Positionierung einer Kameravorrichtung, das Folgendes aufweist:
Steuern eines Motors, der mit der Kameravorrichtung verbunden ist, zum Bewegen in einer horizontalen Richtung, Bestimmen einer horizontalen Mittelposition gemäß zweier Grenzpositionen in der horizontalen Richtung und Bewegen der Kameravorrichtung auf die horizontale Mittelposition (101; 201; 301); und
Steuern des Motors, der mit der Kameravorrichtung verbunden ist, zum Bewegen in einer vertikalen Richtung, Bestimmen einer vertikalen Mittelposition gemäß zweier Grenzpositionen in der vertikalen Richtung und Bewegen der Kameravorrichtung auf die vertikale Mittelposition (102; 202; 302); und
Bewegen der Kameravorrichtung auf eine Zielposition gemäß einer erhaltenen Bewegungsanweisung und Aufzeichnen einer Koordinatenposition, auf die die Kameravorrichtung in der horizontalen Richtung und der vertikalen Richtung bewegt wird, nachdem sie die horizontale Mittelposition und die vertikale Mittelposition erreicht hat (203; 303);
**dadurch gekennzeichnet, dass** das Verfahren ferner Folgendes aufweist:
Steuern der Kameravorrichtung, so dass sie sich zuerst auf die horizontale Mittelposition und die vertikale Mittelposition bewegt und sich dann auf die Koordinatenposition bewegt, auf die die Kameravorrichtung in der horizontalen Richtung und der vertikalen Richtung bewegt wurde, nach Erkennen, dass die Kameravorrichtung umgeschaltet, aktiviert oder neu gestartet wird oder ein voreingestellter Zeitraum erreicht wird (204; 304);
ferner **dadurch gekennzeichnet, dass** Steuern des Motors, der mit der Kameravorrichtung verbunden ist, zum Bewegen in der horizontalen Richtung, Bestimmen der horizontalen Mittelposition gemäß zweier Grenzpositionen in der horizontalen Richtung und Bewegen der Kameravorrichtung auf die horizontale Mittelposition (101; 201; 301) Folgendes aufweist:
Steuern des Motors, der mit der Kameravorrichtung verbunden ist, zum Bewegen in einer von einer horizontalen Linksrichtung und einer horizontalen Rechtsrichtung;
Aufzeichnen einer Zahl von Drehungen des Motors, wenn der Motor in der einen von der horizontalen Linksrichtung und der horizontalen Rechtsrichtung auf die Grenzposition bewegt wird;
Bewegen des Motors in der anderen von der horizontalen Linksrichtung und der horizontalen Rechtsrichtung;
Aufzeichnen einer kumulativen Zahl von Drehungen des Motors zwischen den zwei Grenzpositionen in der horizontalen Richtung, wenn der Motor auf die Grenzposition in der anderen von der horizontalen Linksrichtung und der horizontalen Rechtsrichtung bewegt wird; und
nochmaliges Bewegen des Motors in der einen von der horizontalen Linksrichtung und der horizontalen Rechtsrichtung um die Hälfte der kumulativen Drehungen des Motors, um die Kameravorrichtung auf die horizontale Mittelposition zu bewegen;
und dadurch, dass das Steuern des Motors, der mit der Kameravorrichtung verbunden ist, zum Bewegen in der vertikalen Richtung, Bestimmen der vertikalen Mittelposition gemäß zweier Grenzpositionen in der vertikalen Richtung und Bewegen der Kameravorrichtung auf die vertikale Mittelposition (102; 202; 302) Folgendes aufweist:
Steuern des Motors, der mit der Kameravorrichtung verbunden ist, zum Bewegen in einer von einer vertikalen Aufwärtsrichtung und einer vertikalen Abwärtsrichtung;
Aufzeichnen einer Zahl von Drehungen des Motors, wenn der Motor in der einen von der vertikalen Aufwärtsrichtung und der vertikalen Abwärtsrichtung auf die Grenzposition bewegt wird;
Bewegen des Motors in der anderen von der vertikalen Aufwärtsrichtung und der vertikalen Abwärtsrichtung;
Aufzeichnen einer kumulativen Zahl von Drehungen des Motors zwischen den zwei Grenzpositionen in der vertikalen Richtung, wenn der Motor in der anderen von der vertikalen Aufwärtsrichtung und der vertikalen Abwärtsrichtung auf die Grenzposition bewegt wird, und
nochmaliges Bewegen des Motors in der einen von der vertikalen Aufwärtsrichtung und der vertikalen Abwärtsrichtung um die Hälfte der kumulativen Zahl von Drehungen des Motors, um die Kameravorrichtung auf die vertikale Mittelposition zu bewegen.

2. Verfahren nach Anspruch 1, wobei das Bewegen der Kameravorrichtung gemäß der erhaltenen Bewegungsanweisung und das Aufzeichnen der Koordinatenposition, auf die die Kameravorrichtung in der horizontalen Richtung und der vertikalen Richtung bewegt wird, nachdem sie die horizontale Mittelposition und die vertikale Mittelposition erreicht hat (203; 303), Folgendes aufweist:
Erhalten einer Bewegungsanweisung von einem Mobil-Endgerät oder einer Fernsteuerung, bei dem die Bewegungsanweisung eine anzufahrende Zielposition aufweist;
Bewegen der Kameravorrichtung auf die Zielposition von der horizontalen Mittelposition und der vertikalen Mittelposition gemäß der Zielposition;
Aufzeichnen der Koordinatenposition, auf die die Kameravorrichtung in der horizontalen Richtung und der vertikalen Richtung bewegt wird, durch Aufzeichnen der Zahl von Drehungen und einer Drehrichtung des Motors in der horizontalen Richtung und der vertikalen Richtung.

3. Verfahren nach Anspruch 1 oder 2, wobei das Erhalten der Bewegungsanweisung von dem Mobil-Endgerät oder der Fernsteuerung Folgendes aufweist:
Erhalten einer Bewegungsanweisung, die von dem Mobil-Endgerät oder der Fernsteuerung über WiFi-, Bluetooth- oder Infrarot-Verbindung übertragen wird.

4. Vorrichtung zum Steuern einer Positionierung einer Kameravorrichtung, die Folgendes aufweist:
ein Horizontalpositioniermodul (401), das konfiguriert ist zum Steuern eines Motors, der mit der Kameravorrichtung verbunden ist, zum Bewegen in einer horizontalen Richtung, Bestimmen einer horizontalen Mittelposition gemäß zweier Grenzpositionen in der horizontalen Richtung und Bewegen der Kameravorrichtung auf die horizontale Mittelposition;
ein Vertikalpositioniermodul (402), das konfiguriert ist zum Steuern des Motors, der mit der Kameravorrichtung verbunden ist, zum Bewegen in einer vertikalen Richtung, Bestimmen einer vertikalen Mittelposition gemäß zweier Grenzpositionen in der vertikalen Richtung und zum Bewegen der Kameravorrichtung auf die vertikale Mittelposition;
ein Anweisungsverarbeitungsmodul (403), das konfiguriert ist zum Bewegen der Kameravorrichtung auf eine Zielposition gemäß einer erhaltenen Bewegungsanweisung und zum Aufzeichnen einer Koordinatenposition, auf die die Kameravorrichtung in der horizontalen Richtung und der vertikalen Richtung bewegt wird, nachdem sie die horizontale Mittelposition und die vertikale Mittelposition erreicht hat; und
**dadurch gekennzeichnet, dass** die Vorrichtung ferner Folgendes aufweist:
ein Rücksetzmodul (404), das konfiguriert ist zum Steuern der Kameravorrichtung, so dass sie sich nach Erkennen, dass die Kameravorrichtung umgeschaltet, aktiviert oder neu gestartet wird oder ein voreingestellter Zeitraum erreicht wird, zuerst auf die horizontale Mittelposition und die vertikale Mittelposition bewegt und sich dann auf die Koordinatenposition bewegt, die von dem Anweisungsverarbeitungsmodul (403) aufgezeichnet wurde;
ferner **dadurch gekennzeichnet, dass** das Horizontalpositioniermodul (401) Folgendes aufweist:
ein erstes Verarbeitungsuntermodul (4011), das konfiguriert ist zum Steuern des Motors, der mit der Kameravorrichtung verbunden ist, zum Bewegen in einer von einer horizontalen Linksrichtung und einer horizontalen Rechtsrichtung, zum Aufzeichnen einer Zahl von Drehungen des Motors, wenn der Motor in der einen von der horizontalen Linksrichtung und der horizontalen Rechtsrichtung auf die Grenzposition bewegt wird, zum Bewegen des Motors in der anderen von der horizontalen Linksrichtung und der horizontalen Rechtsrichtung und zum Aufzeichnen einer kumulativen Zahl von Drehungen des Motors zwischen den zwei Grenzpositionen in der horizontalen Richtung, wenn der Motor auf die Grenzposition in der anderen von der horizontalen Linksrichtung und der horizontalen Rechtsrichtung bewegt wird; und
ein zweites Verarbeitungsuntermodul (4012), das konfiguriert ist zum nochmaligen Bewegen des Motors in der einen von der horizontalen Linksrichtung und der horizontalen Rechtsrichtung um die Hälfte der kumulativen Drehungen des Motors, um die Kameravorrichtung auf die horizontale Mittelposition zu bewegen;
und dadurch, dass das Vertikalpositioniermodul (402) Folgendes aufweist:
ein erstes Verarbeitungsuntermodul (4021), das konfiguriert ist zum Steuern des Motors, der mit der Kameravorrichtung verbunden ist, zum Bewegen in einer von einer vertikalen Aufwärtsrichtung und einer vertikalen Abwärtsrichtung, zum Aufzeichnen einer Zahl von Drehungen des Motors, wenn der Motor in der einen von der vertikalen Aufwärtsrichtung und der vertikalen Abwärtsrichtung auf die Grenzposition bewegt wird, zum Bewegen des Motors in der anderen von der vertikalen Aufwärtsrichtung und der vertikalen Abwärtsrichtung, und zum Aufzeichnen einer kumulativen Zahl von Drehungen des Motors zwischen den zwei Grenzpositionen in der vertikalen Richtung, wenn der Motor in der anderen von der vertikalen Aufwärtsrichtung und der vertikalen Abwärtsrichtung auf die Grenzposition bewegt wird, und
ein zweites Verarbeitungsuntermodul (4022), das konfiguriert ist zum nochmaligen Bewegen des Motors in der einen von der vertikalen Aufwärtsrichtung und der vertikalen Abwärtsrichtung um die Hälfte der kumulativen Zahl von Drehungen des Motors, um die Kameravorrichtung auf die vertikale Mittelposition zu bewegen.

5. Kameravorrichtung, die eine Vorrichtung zum Steuern einer Positionierung einer Kameravorrichtung nach Anspruch 4 aufweist.

6. Computerprogramm, das bei Ausführung an einer Kameravorrichtung nach Anspruch 5 sie zum Durchführen des Verfahrens nach einem der Ansprüche 1 bis 3 veranlasst.

## Revendications

1. Procédé pour commander un positionnement d'un dispositif de caméra, comprenant :
commander un moteur connecté au dispositif de caméra pour le déplacer dans une direction horizontale, déterminer une position de centre horizontal conformément à deux positions limites dans la direction horizontale, et déplacer le dispositif de caméra à la position du centre horizontal (101, 201, 301) ;
commander le moteur connecté au dispositif de caméra pour le déplacer dans une direction verticale, déterminer une position de centre vertical conformément à deux positions limites dans la direction verticale, et déplacer le dispositif de caméra à la position du centre vertical (102, 202, 302) ; et
déplacer le dispositif de caméra à une position cible conformément à une instruction de mouvement obtenue, et enregistrer une position de coordonnées à laquelle le dispositif de caméra est déplacé dans la direction horizontale et dans la direction verticale après avoir atteint la position du centre horizontal et la position du centre vertical (203, 303) ;
**caractérisé en ce que** le procédé comprend en outre :
commander le dispositif de caméra pour le déplacer premièrement à la position du centre horizontal et à la position du centre vertical et puis le déplacer à la position de coordonnées à laquelle le dispositif de caméra a été déplacé dans la direction horizontale et dans la direction verticale, après avoir détecté que le dispositif de caméra est basculé, activé ou remis en marche ou bien qu'une période de temps préréglée est atteinte (204, 304);
**caractérisé en outre en ce que**
commander le moteur connecté au dispositif de caméra pour le déplacer dans une direction horizontale, déterminer la position du centre horizontal conformément à deux positions limites dans la direction horizontale, et déplacer le dispositif de caméra à la position du centre horizontal (101, 201, 301) comprend :
commander le moteur connecté au dispositif de caméra pour le déplacer dans l'une d'une direction horizontale à gauche et d'une direction horizontale à droite ;
enregistrer un nombre de rotations du moteur lorsque le moteur est déplacé à la position limite dans l'une de la direction horizontale à gauche et de la direction horizontale à droite ;
déplacer le moteur dans l'autre de la direction horizontale à gauche et de la direction horizontale à droite
enregistrer un nombre cumulatif de rotations du moteur entre les deux positions limites dans la direction horizontale, lorsque le moteur est déplacé à la position limite dans l'autre de la direction horizontale à gauche et de la direction horizontale à droite et
déplacer encore le moteur dans l'une de la direction horizontale à gauche et de la direction horizontale à droite de la moitié des rotations cumulatives du moteur, de manière à déplacer le dispositif de caméra à la position du centre horizontal ;
et **en ce que**
commander le moteur connecté au dispositif de caméra pour le déplacer dans une direction verticale, déterminer la position du centre vertical conformément à deux positions limites dans la direction verticale, et déplacer le dispositif de caméra à la position du centre vertical (102, 202, 302) comprend :
commander le moteur connecté au dispositif de caméra pour le déplacer dans l'une d'une direction verticale vers le haut et d'une direction verticale vers le bas ;
enregistrer un nombre de rotations du moteur lorsque le moteur est déplacé à la position limite dans l'une de la direction verticale vers le haut et de la direction verticale vers le bas ;
déplacer le moteur dans l'autre de la direction verticale vers le haut et de la direction verticale vers le bas ;
enregistrer un nombre cumulatif de rotations du moteur entre les deux positions limites dans la direction verticale, lorsque le moteur est déplacé à la position limite dans l'autre de la direction verticale vers le haut et de la direction verticale vers le bas ; et
déplacer encore le moteur dans l'une de la direction verticale vers le haut et de la direction verticale vers le bas de la moitié du nombre de rotations cumulatives du moteur, de manière à déplacer le dispositif de caméra à la position du centre vertical.

2. Procédé selon la revendication 1, dans lequel déplacer le dispositif de caméra conformément à l'instruction de mouvement obtenue, et enregistrer la position de coordonnées à laquelle le dispositif de caméra est déplacé dans la direction horizontale et dans la direction verticale après avoir atteint la position du centre horizontal et la position du centre vertical (203, 303) comprend :
obtenir une instruction de mouvement d'un terminal mobile ou d'un contrôleur à distance, où l'instruction de mouvement comprend une position cible à laquelle faire le déplacement ;
déplacer le dispositif de caméra à la position cible de la position du centre horizontal et de la position du centre vertical conformément à la position cible ;
enregistrer la position de coordonnées à laquelle le dispositif de caméra est déplacé dans la direction horizontale et dans la direction verticale en enregistrant le nombre de rotations et une direction de rotation du moteur dans la direction horizontale et dans la direction verticale.

3. Procédé selon la revendication 1 ou 2, dans lequel obtenir l'instruction de mouvement du terminal mobile ou du contrôleur à distance comprend :
obtenir une instruction de mouvement transmise du terminal mobile ou du contrôleur à distance via WiFi, Bluetooth ou une connexion infrarouge.

4. Appareil pour commander un positionnement d'un dispositif de caméra, comprenant :
un module de localisation horizontale (401), configuré pour commander un moteur connecté au dispositif de caméra pour le déplacer dans une direction horizontale, pour déterminer une position de centre horizontal conformément à deux positions limites dans la direction horizontale, et pour déplacer le dispositif de caméra à la position du centre horizontal ;
un module de localisation verticale (402), configuré pour commander le moteur connecté au dispositif de caméra pour le déplacer dans une direction verticale, pour déterminer une position de centre vertical conformément à deux positions limites dans la direction verticale, et pour déplacer le dispositif de caméra à la position du centre vertical ;
un module de traitement d'instruction (403), configuré pour déplacer le dispositif de caméra à une position cible conformément à une instruction de mouvement obtenue, et pour enregistrer une position de coordonnées à laquelle le dispositif de caméra est déplacé dans la direction horizontale et dans la direction verticale après avoir atteint la position du centre horizontal et la position du centre vertical ; et
**caractérisé en ce que** l'appareil comprend en outre :
un module de remise à l'état initial (404), configuré pour commander le dispositif de caméra pour le déplacer premièrement à la position du centre horizontal et à la position du centre vertical et puis le déplacer à la position de coordonnées enregistrée par le module de traitement d'instruction (403), après avoir détecté que le dispositif de caméra est basculé, activé ou remis en marche ou qu'une période de temps préréglée est atteinte ; **caractérisé en outre en ce que**
le module de localisation horizontale (401) comprend :
un premier sous-module de traitement (4011), configuré pour commander le moteur connecté au dispositif de caméra pour le déplacer dans l'une d'une direction horizontale à gauche et d'une direction horizontale à droite, pour enregistrer un nombre de rotations du moteur lorsque le moteur est déplacé à la position limite dans l'une de la direction horizontale à gauche et de la direction horizontale à droite, pour déplacer le moteur dans l'autre de la direction horizontale à gauche et de la direction horizontale à droite, et pour enregistrer un nombre cumulatif de rotations du moteur entre les deux positions limites dans la direction horizontale lorsque le moteur est déplacé à la position limite dans l'autre de la direction horizontale à gauche et de la direction horizontale à droite et
un deuxième sous-module de traitement (4012), configuré pour déplacer encore le moteur dans l'une de la direction horizontale à gauche et de la direction horizontale à droite de la moitié du nombre cumulatif de rotations du moteur, de manière à déplacer le dispositif de caméra à la position du centre horizontal ;
et **en ce que** le module de localisation verticale (402) comprend :
un premier sous-module de traitement (4021), configuré pour commander le moteur connecté au dispositif de caméra pour le déplacer dans l'une d'une direction verticale vers le haut et d'une direction verticale vers le bas, pour enregistrer un nombre de rotations du moteur lorsque le moteur est déplacé à la position limite dans la direction verticale vers le haut et dans la direction verticale vers le bas, pour déplacer le moteur dans l'autre de la direction verticale vers le haut et de la direction verticale vers le bas et pour enregistrer un nombre cumulatif de rotations du moteur entre les deux positions limites dans la direction verticale lorsque le moteur est déplacé à la position limite dans l'autre de la direction verticale vers le haut et de la direction verticale vers le bas et
un deuxième sous-module de traitement (4022), configuré pour déplacer encore le moteur dans l'une de la direction verticale vers le haut et de la direction verticale vers le bas de la moitié du nombre cumulatif de rotations du moteur, de manière à déplacer le dispositif de caméra à la position du centre vertical.

5. Dispositif de caméra, comprenant un appareil pour commander un positionnement d'un dispositif de caméra selon la revendication 4.

6. Programme informatique qui lorsque exécuté sur un dispositif de caméra selon la revendication 5 fait qu'il mette en œuvre le procédé selon l'une quelconque des revendications 1 à 3.
